# EUROPEAN PATENT SPECIFICATION

(11) **EP 2 868 533 B1**
(45) Date of publication and mention of the grant of the patent: **23.11.2016**
(21) Application number: 14189308.1
(22) Date of filing: 17.10.2014
(51) Int. Cl.: B60R 21/0136, B60R 21/34

(54) **Mounting structure of pedestrian collision detection sensor and vehicle having such a mounting structure**
Montagestruktur eines Fußgängeraufprallsensors und Fahrzeug mit einer solchen Montagestruktur
Structure de montage d'un capteur de détection de collision pour piétons et véhicule avec une telle structure

(30) Priority: 21.10.2013 JP 2013218561
(43) Date of publication of application: 06.05.2015
(73) Proprietor: Toyota Jidosha Kabushiki Kaisha, Toyota-shi, Aichi 471-8571 (JP)
(72) Inventor: Narita, Sohtaro, Toyota-shi, Aichi 471-8571 (JP)
(74) Representative: TBK

(56) References cited:
- EP-A2- 2 295 296
- DE-A1-102006 040 218
- FR-A1- 2 911 573
- JP-A- H08 216 826
- JP-A- H11 263 191
- JP-A- 2001 001 949
- JP-A- 2003 081 052
- JP-A- 2004 268 687
- JP-A- 2006 088 903
- JP-A- 2011 143 825
- US-A1- 2004 108 157

## Description

### BACKGROUND OF THE INVENTION

### 1. Field of the Invention

The invention relates to a mounting structure of a pedestrian collision detection sensor, and to a vehicle having such a mounting structure.

### 2. Description of Related Art

In a mounting structure of a pedestrian collision detection apparatus (a pedestrian collision detection sensor) described in Japanese Patent Application Publication

JP 2011-143825 A, a pressure chamber extends in a vehicle width direction along a front surface of a bumper reinforcement, and is covered from a vehicle front side by a bumper cover. Also, a pressure sensor (a pressure detector) is provided inside the pressure chamber. The pressure sensor outputs a signal indicative of a change in pressure in the pressure chamber to an ECU (a collision determining portion). In a collision between a vehicle and a pedestrian, the bumper deforms toward the vehicle rear side and presses on the pressure chamber via an absorber. As a result, the pressure in the pressure chamber changes and the ECU determines whether the object that collides with the vehicle is a pedestrian. Japanese Patent Application Publication JP 2001-001949 A and Japanese Patent Application Publication JP 2003-081052 A both describe a hood raising mechanism that uses this pedestrian collision detection apparatus.

With the mounting structure of this pedestrian collision detection apparatus, the design of the vehicle front end portion when viewed from the side may affect vehicle-pedestrian collision detection by the pedestrian collision detection apparatus. That is, in a vehicle in which a bumper cover that forms a vehicle front end lower portion protrudes farther toward the vehicle front side than a vehicle front end upper portion (such as a radiator grille) does, like the design when viewed from the side described in JP 2011-143825 A, the portion that collides with the pedestrian is mainly the vehicle front end lower portion (i.e., the bumper cover). Therefore, a collision between the vehicle and a pedestrian is able to be detected well by the pedestrian collision detection apparatus.

However, with a vehicle in which a front end of a hood is arranged farther toward the vehicle front side than a bumper reinforcement and the vehicle front end upper portion (such as a radiator grille) protrudes farther toward the vehicle front side than a bumper cover that forms the vehicle front end lower portion in a vehicle design viewed from the side, for example, the portion that collides with the pedestrian is mainly the vehicle front end upper portion. Therefore, a collision between the vehicle and the pedestrian may not be able to be detected, or not be able to be detected well, by the pedestrian collision detection apparatus. Therefore, in a vehicle set to this kind of design when viewed from the side, it is preferable to be able to detect a collision between the vehicle and a pedestrian well by a pedestrian collision detection apparatus.

JP H08-216826 A discloses a hood air bag sensor system having a mounting structure of a pedestrian collision detection sensor comprising the features of the preamble of claim 1.

### SUMMARY OF THE INVENTION

It is the object of the present invention to provides a mounting structure of a pedestrian collision detection sensor capable of detecting a collision between a vehicle and a pedestrian well, regardless of the design of the vehicle front end portion when viewed from the side (particularly when a vehicle front end upper portion protrudes farther toward a vehicle front side than a vehicle front end lower portion in a side view). Further, a vehicle having such a mounting structure shall be provided.

This object is solved by a mounting structure of a pedestrian collision detection sensor having the features of claim 1. A vehicle having such a mounting structure is stated in claim 11.

Further developments are stated in the dependent claims.

In this mounting structure, the vehicle body-side member is provided on the vehicle lower side of the front end portion of the hood. Here, the pedestrian collision detection sensor is fixed to one of the vehicle body-side member and the front end portion of the hood, and extends in the vehicle width direction between the vehicle body-side member and the front end portion of the hood. Also, the pressing portion is provided on the other of the vehicle body-side member and the front end portion of the hood, and the pressing portion is arranged opposite the pedestrian collision detection sensor.

Also, with a collision between the vehicle and a pedestrian, the pedestrian falls onto the hood. Consequently, a collision load downward at an angle toward the rear of the vehicle is applied to the front end portion of the hood, such that the front end portion of the hood bendably deforms downward at an angle toward the rear of the vehicle. Therefore, when the pedestrian collision detection sensor is fixed to the vehicle body-side member, the pressing portion is displaced toward the pedestrian collision detection side and presses on the pedestrian collision detection sensor. On the other hand, when the pedestrian collision detection sensor is fixed to the hood, the pedestrian collision detection sensor is displaced toward the pressing portion side and pushed on by the pressing portion. As a result, the detection signal to the collision determining portion of the pedestrian collision detection sensor changes, and it is determined whether the object that collides with the vehicle is a pedestrian by the collision determining portion.

In this way, the pedestrian collision detection sensor is not configured to be pressed on by the bumper cover as in the related art, but rather is configured to be pressed on by the pressing portion using the collision load acting on the hood. Therefore, even in the vehicle in which the vehicle front end upper portion protrudes farther toward the vehicle front side than the vehicle front end lower portion does, in a design when the vehicle front end portion is viewed from the side, the pedestrian collision detection sensor is able to better detect a collision between the vehicle and a pedestrian. Accordingly, regardless of the design of the vehicle front end portion when viewed from the side (particularly when the vehicle front end upper portion protrudes farther toward the vehicle front side than the vehicle front side lower portion does in a side view), a collision between the vehicle and a pedestrian can be detected well.

In the mounting structure described above, the pedestrian collision detection sensor includes the pressure tube and the pressure detector, and the pressure tube extends in the vehicle width direction. Therefore, the mounting space of the pedestrian collision detection sensor is able to be set relatively small.

In the mounting structure described above, the pedestrian collision detection sensor may be fixed to the vehicle body-side member, and the pressing portion may be provided on the front end portion of the hood. Also, the pressing portion may be inclined toward a vehicle upper side farther toward a vehicle rear side in a side sectional view.

In the mounting structure described above, the pedestrian collision detection sensor is fixed to the vehicle body-side member. That is, the pedestrian collision detection sensor is fixed not to the hood that is able to move with respect to the vehicle body, but to the vehicle body-side member that is fixed to the vehicle body. As a result, a connecting member that connects the pedestrian collision detection sensor to the collision determining portion is able to be easily arranged.

Also, the pressing portion is provided on the front end portion of the hood, and this pressing portion is inclined toward the vehicle upper side farther toward the vehicle rear side in a side sectional view. Therefore, the pressing portion is arranged in a direction substantially orthogonal to the collision load downward at an angle toward the rear of the vehicle that acts on the hood when there is a collision between the vehicle and the pedestrian. As a result, the pedestrian collision detection sensor is able to be pressed on efficiently by the pressing portion.

In the mounting structure described above, a vehicle front end upper portion may protrude farther toward a vehicle front side than a vehicle front end lower portion does in a side view.

In the mounting structure described above, a collision between the vehicle and a pedestrian is able to be detected well by the pedestrian collision detection sensor, in a vehicle in which the vehicle front end upper portion protrudes farther toward the vehicle front side than the vehicle front end lower portion does in a side view.

In the mounting structure described above, the vehicle body-side member may be a radiator support cover that is made of resin and that is arranged covering a radiator support from a vehicle upper side.

In the mounting structure described above, a rear end portion of the radiator support cover may be fixed to a radiator support upper that forms an upper portion of the radiator support.

In the mounting structure described above, a front end portion of the radiator support cover may be fixed to a radiator grille, and the front end portion of the radiator support cover may be curved in a generally arc shape that protrudes toward a vehicle front side in a plan view from a vehicle upper side.

In the mounting structure described above, a housing portion for housing at least a portion of the pedestrian collision detection sensor may be integrally formed on the front end portion of the radiator support cover; and the housing portion may be formed in a recessed shape that is open toward the vehicle upper side in a side sectional view.

In the mounting structure described above, a housing portion may include a bottom wall portion in which a plate thickness direction is a substantially vehicle up-down direction, a front wall portion that extends from a front end of the bottom wall portion toward the vehicle upper side and a vehicle front side, and a rear wall portion that extends from a rear end of the bottom wall portion toward the vehicle upper side and a vehicle rear side. Also, the housing portion may have a uniform sectional shape and extends in the vehicle width direction along the front end portion of the radiator support cover.

In the mounting structure described above, the front end portion of the hood may be curved so as to form a concentric circle with the front end of the radiator support cover, in the plan view from above the vehicle when the hood is in a closed position.

In the mounting structure described above, the pressing portion may be formed on the front end portion of the hood, and extend in the vehicle width direction along the front end portion of the hood.

In the mounting structure described above, when a portion of the pedestrian collision detection sensor is fixed to the radiator support cover, an upper portion of the portion of the pedestrian collision detection sensor may protrude farther toward the vehicle upper side than the housing portion of the radiator support cover does, and the pressing portion of the hood may be arranged substantially opposite the upper portion of the portion of the pedestrian collision detection sensor in a vehicle up-down direction.

In the mounting structure described above, the front end portion of the hood may be arranged farther toward a vehicle front side than a bumper reinforcement is, in a side view.

According to the mounting structure described above, regardless of the design of the vehicle front end portion when viewed from the side (particularly when the vehicle front end upper portion protrudes farther toward the vehicle front side than the vehicle front side lower portion does in a side view), a collision between the vehicle and a pedestrian can be detected well.

Also according to the mounting structure described above, a mounting structure of a pedestrian collision detection sensor having good space efficiency is able to be realized.

Further, according to the mounting structure described above, a connecting member that connects the pedestrian collision detection sensor to the collision determining portion is able to be easily arranged, and the pedestrian collision detection sensor is able to be efficiently pressed on by the pressing portion.

Also the mounting structure described above makes it possible to better detect a collision between a vehicle and a pedestrian by a pedestrian collision detection sensor, in a vehicle in which a vehicle front end upper portion protrudes farther toward a vehicle front side than a vehicle front end lower portion does in a side view.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an enlarged sectional view from a vehicle left side, of a front end portion of a radiator support cover and a hood of a vehicle to which a mounting structure of a pedestrian collision detection sensor according to one example embodiment of the invention is applied;
FIG. 2 is a plan view showing a frame format from a vehicle upper side, of a front portion of the vehicle shown in FIG. 1;
FIG. 3 is a plan view corresponding to FIG. 2, of the front portion of the vehicle shown in FIG. 2 with a hood removed;
FIG. 4 is a sectional view (an enlarged sectional view taken along line IV - IV in FIG. 2) from the vehicle left side, of the front portion of the vehicle shown in FIG. 2;
FIG. 5A is a side view showing a frame format from the vehicle left side, of a state before a collision between the vehicle and a pedestrian; and
FIG. 5B is a side view showing a frame format corresponding to FIG. 5A, of a state at the time of a collision between the vehicle and the pedestrian.

### DETAILED DESCRIPTION OF EMBODIMENTS

Hereinafter, a vehicle (an automobile) 10 to which a mounting structure S of a pedestrian collision detection sensor according to one example embodiment of the invention is applied will be described. In the drawings, arrow FR indicates a vehicle front side, arrow LH indicates a vehicle left side (one side in a vehicle width direction), and arrow UP indicates a vehicle upper side.

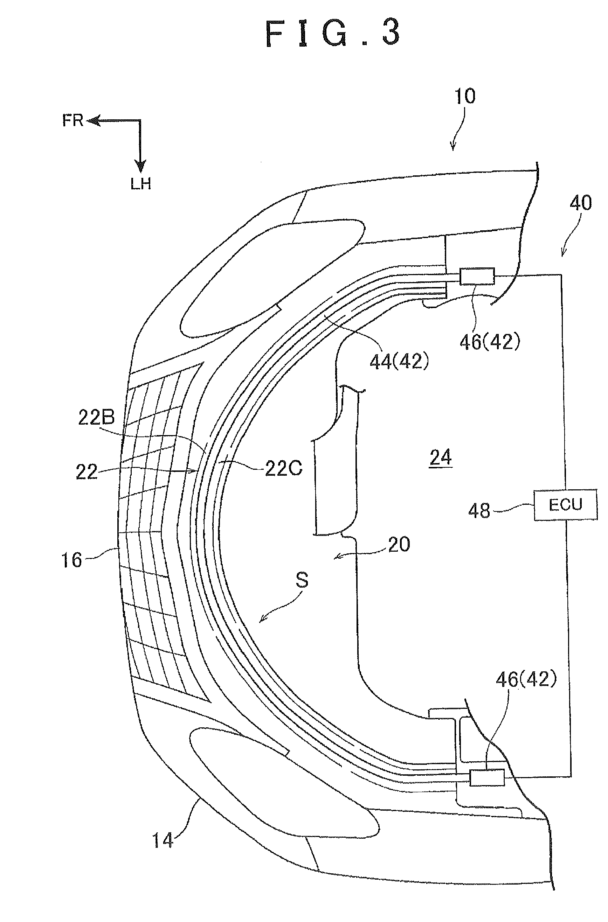

As shown in FIG. 3, in the vehicle 10, a collision with the vehicle 10 (or more specifically, whether or not there is a collision with the vehicle 10) is determined by a pedestrian collision determining system 40 provided in a front portion of the vehicle 10. Hereinafter, the structure of the front portion of the vehicle 10 will be described first, and then the pedestrian collision determining system 40 will be described.

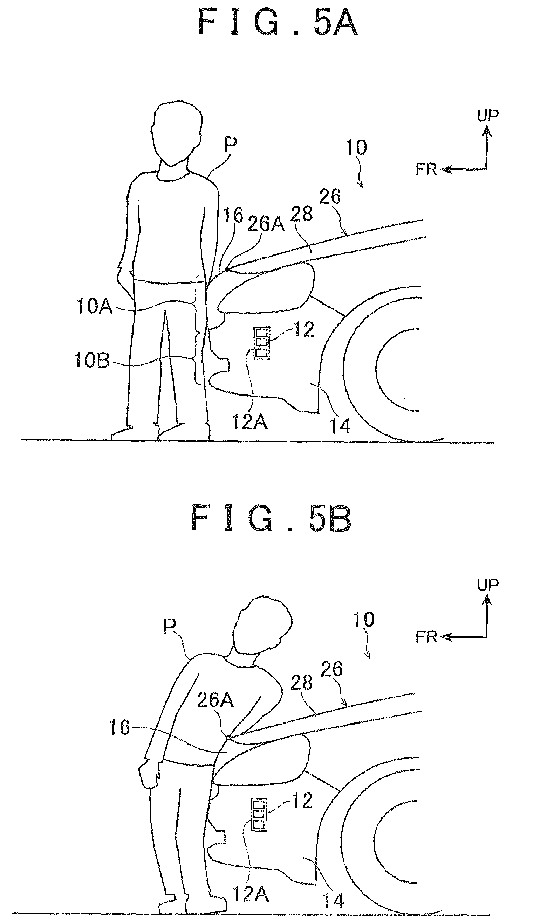

As shown in FIG. 5A, the vehicle 10 includes a bumper reinforcement (hereinafter, referred to as "bumper RF") 12 that is a bumper frame member. This bumper RF 12 is made of metal material such as ferrous metal or aluminum-based metal, for example, and is configured as a frame member arranged with a vehicle width direction as a length direction. Also, the bumper RF 12 is supported with respect to a vehicle body, extending between front ends of a pair of left and right front side members, not shown, that form a frame member on the vehicle body side. Further, both side portions of the bumper RF 12 in the vehicle width direction protrude slightly toward the vehicle width direction outside with respect to the front side members.

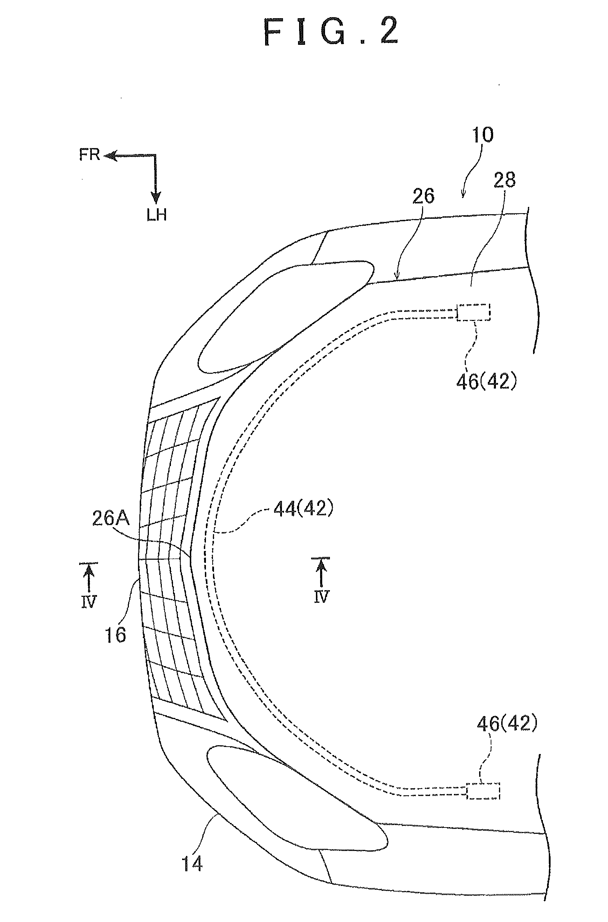

A bumper cover 14 is provided on a vehicle front side of the bumper RF 12. The bumper cover 14 extends in the vehicle width direction so as to cover the bumper RF 12 from the vehicle front side, and is fixedly supported with respect to the vehicle body at a portion that is not shown. Also, as shown in both FIG. 2 and FIG. 3, a radiator grille 16 is provided on a vehicle upper side of a vehicle width direction center portion of the bumper cover 14. This radiator grille 16 is formed protruding farther toward the vehicle front side than the bumper cover 14 in a side view. As a result, a vehicle front end upper portion 10A in a side view is formed by the radiator grille 16, and a vehicle front end lower portion 10B in a side view is formed by the bumper cover 14. With the design of the vehicle 10 when viewed from the side, the vehicle front end upper portion 10A protrudes farther toward the vehicle front side than the vehicle front end lower portion 10B does (see FIG. 5A).

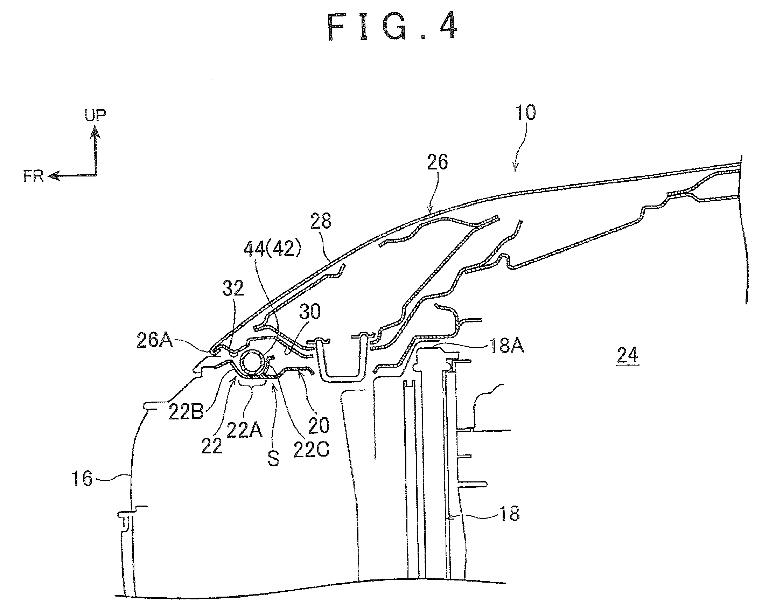

Meanwhile, a radiator support 18 that supports a radiator, not shown, is provided in a front portion of the vehicle 10, as shown in FIG. 4. This radiator support 18 is arranged to a vehicle rear side of the bumper RF 12 (not shown in FIG. 4), and is formed in a generally rectangular frame shape in a front view from the vehicle front side.

Also, a radiator support cover 20 as a vehicle body-side member is provided on a vehicle upper side of the radiator support 18, as also shown in FIG. 3. The radiator support cover 20 is made of resin material and formed in a generally plate shape, and is arranged covering the radiator support 18 from the vehicle upper side, with the plate thickness direction in substantially the vehicle up-down direction. Also, a rear end portion of the radiator support cover 20 is fixed to a radiator support upper 18A that forms an upper portion of the radiator support 18 described above. Meanwhile, a front end portion of the radiator support cover 20 is fixed to the radiator grille 16. The front end of the radiator support cover 20 is curved in a generally arc shape that protrudes toward the vehicle front side in a plan view from the vehicle upper side (see FIG. 3).

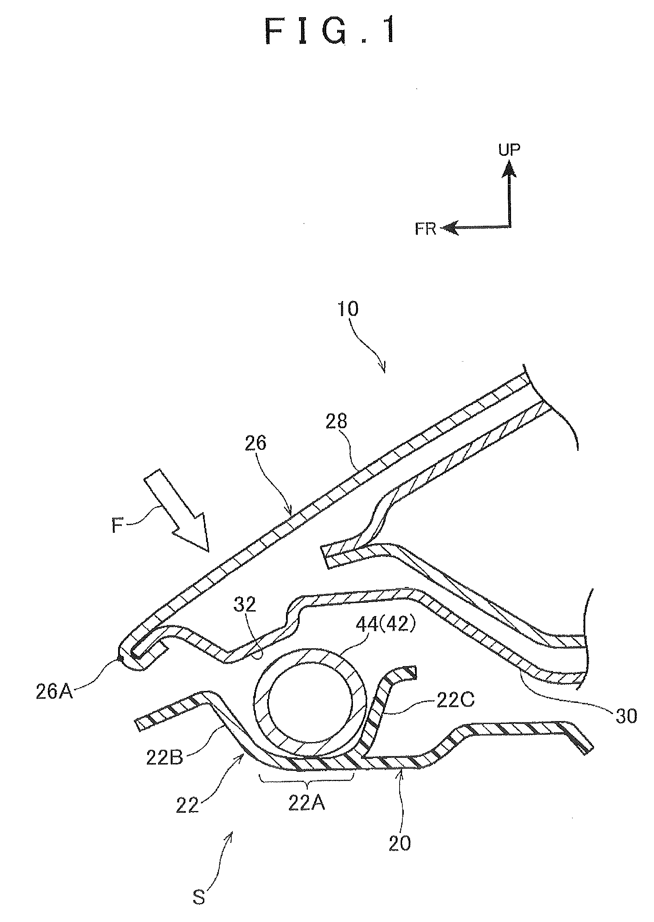

A housing portion 22 for housing a pressure tube 44 that will be described later is integrally formed on a front end portion of the radiator support cover 20. This housing portion 22 is formed in a recessed shape that is open toward the vehicle upper side in a side sectional view. More specifically, the housing portion 22 includes a bottom wall portion 22A in which a plate thickness direction is substantially the vehicle up-down direction, a front wall portion 22B that extends toward the vehicle upper side and the vehicle front side from a front end of the bottom wall portion 22A, and a rear wall portion 22C that extends toward the vehicle upper side and the vehicle rear side from a rear end of the bottom wall portion 22A, as shown in FIG 1. Also, the housing portion 22 has a uniform sectional shape and extends in the vehicle width direction along the front end of the radiator support cover 20. That is, the housing portion 22 curves so as to protrude toward the vehicle front side in a plan view from above the vehicle.

A hood 26 that covers a power unit compartment 24 of the vehicle 10 from the vehicle upper side is provided on the vehicle upper side of the radiator support cover 20, as shown in FIG. 4. This hood 26 is pivotally supported by a hood hinge, not shown, that is fixed to the vehicle body on both sides in the vehicle width direction of a rear end portion of the hood 26. As a result, the hood 26 is able to open and close between a closed position in which the power unit compartment 24 is closed (i.e., the position shown in FIG 4), and an open position in which the power unit compartment 24 is open.

Also, the hood 26 includes a hood outer panel 28 that is arranged on the vehicle outside and forms a design surface, and a hood inner panel 30 that is arranged on the power unit compartment 24 side and reinforces the hood outer panel 28. Terminal portions of the hood outer panel 28 and the hood inner panel 30 are joined together by hemming. Further, a front end 26A of the hood 26 is curved in a generally arc shape that protrudes toward the vehicle front side in a plan view from above the vehicle (see FIG. 2). More specifically, the front end 26A of the hood 26 is curved so as to form a concentric circle with the front end of the radiator support cover 20, in a plan view from above the vehicle when the hood 26 is in the closed position. Also, the front end 26A of the hood 26 is arranged farther toward the vehicle front side than the front surface 12A of the bumper RF 12 in a side view (see FIG. 5A).

Also, a pressing portion 32 that presses on the pressure tube 44 that will be described later is formed on a front end portion of the hood inner panel 30, as shown in FIG. 1. This pressing portion 32 is arranged to the vehicle upper side of the housing portion 22 (more specifically, the front wall portion 22B) of the radiator support cover 20, and extends in the vehicle width direction along the front end of the hood 26, slanted toward the vehicle upper side farther toward the vehicle rear side in a side sectional view.

Next, the pedestrian collision determining system 40 will be described. As shown in FIG. 3, the pedestrian collision determining system 40 includes a pedestrian collision detection sensor 42, and an ECU 48 as a collision determining portion. The pedestrian collision detection sensor 42 and the ECU 48 are electrically connected together. Also, the pedestrian collision detection sensor 42 includes the pressure tube 44, and a pressure sensor 46 as a pressure detector.

As also shown in FIG. 1, the pressure tube 44 is configured as a hollow structure having a generally annular cross-section, and is formed in a generally long shape with the length direction being the vehicle width direction. This pressure tube 44 is housed in the housing portion 22 of the radiator support cover 20, and is fixed to the radiator support cover 20 by a plurality of clips, not shown, at a portion that is not shown. As a result, the pressure tube 44 extends in the vehicle width direction between the front end portion of the hood 26 and the radiator support cover 20, and curves along the front end 26A of the hood 26 in a plan view. Also, when the pressure tube 44 is fixed to the radiator support cover 20, the upper portion of the pressure tube 44 protrudes farther toward the vehicle upper side than the housing portion 22 of the radiator support cover 20 does, and the pressing portion 32 of the hood 26 is arranged substantially opposite the upper portion of the pressure tube 44 in a vehicle up-down direction. Then when a pedestrian P falls onto the hood 26 when there is a collision between the vehicle 10 and the pedestrian P, and the front end portion of the hood 26 consequently bendably deforms downwards at an angle toward the rear of the vehicle, the pressing portion 32 is displaced downward (toward the pressure tube 44 side) at an angle toward the rear of the vehicle and presses on the pressure tube 44.

Moreover, when fixed to the radiator support cover 20, the pressure tube 44 is rigid enough to maintain its shape, and a communication hole that is communicated with atmospheric air is formed in a position that is not shown in the pressure tube 44. Therefore, normally (statically), the inside of the pressure tube 44 is at atmospheric pressure. Then when the pressing portion 32 presses on the pressure tube 44, the pressure tube 44 is crushed while air escapes through the communication hole, and the volume of the pressure tube 44 is decreases while the internal pressure of the pressure tube 44 dynamically changes.

The pressure sensor 46 is provided on both end portions of the pressure tube 44 in the vehicle width direction, and is electrically connected to the ECU 48 that will be described later. This pressure sensor 46 detects the pressure inside the pressure tube 44 and outputs a signal indicative of a pressure change in the pressure tube 44 to the ECU 48.

The ECU 48 is electrically connected to the pressure sensor 46 as described above, and is fixed to the vehicle body in a position that is not shown. Also, the ECU 48 is configured to calculate a collision load based on the output signal of the pressure sensor 46. Further, a collision speed sensor, not shown, that forms the pedestrian collision determining system 40 is electrically connected to the ECU 48. This collision speed sensor outputs a signal indicative of a collision speed with a collision body to the ECU 48, and the ECU 48 then calculates the collision speed based on the output signal of the collision speed sensor. Then, the ECU 48 obtains an effective mass of the collision body from the calculated collision load and collision speed, and determines whether the collision body that collides with the vehicle 10 is a pedestrian by determining whether the effective mass exceeds a threshold value.

Next, the operation and effect of this example embodiment will be described.

When a collision occurs between the vehicle 10 structured as described above and the pedestrian P, the pedestrian P falls onto the hood 26 (see FIG. 5B). Therefore, the front end portion of the hood 26 is pressed on by the pedestrian P, such that an collision load F downward at an angle toward the rear of the vehicle (see arrow F in FIG. 1) acts on the front end portion of the hood 26. As a result, the front end portion of the hood 26 bendably deforms downward (toward the pressure tube 44 side) at an angle toward the rear of the vehicle.

Here, the pressure tube 44 is fixed to the radiator support cover 20, and extends in the vehicle width direction between the front end portion of the hood 26 and the radiator support cover 20. Also, the pressing portion 32 is provided on the front end portion of the hood 26. This pressing portion 32 is arranged substantially vertically opposite the upper portion of the pressure tube 44. Then when the front end portion of the hood 26 bendably deforms downward (toward the pressure tube 44 side) at an angle toward the rear of the vehicle, the pressing portion 32 is displaced downward (toward the pressure tube 44 side) at an angle toward the rear of the vehicle and presses on the pressure tube 44.

As a result, the pressure tube 44 is crushed by the pressing portion 32 and the radiator support cover 20, such that the pressure inside the pressure tube 44 changes. Then a signal indicative of the pressure change in the pressure tube 44 is output to the ECU 48, and the ECU 48 calculates the collision load based on the output signal of the pressure sensor 46. Also, the ECU 48 calculates the collision speed based on the output signal of the collision speed sensor. As a result, the ECU 48 obtains the effective mass of the collision body from the calculated collision load and collision speed, and determines whether the collision body that collides with the vehicle 10 is the pedestrian P by determining whether the effective mass exceeds a threshold value.

In this way, with the vehicle 10 in this example embodiment, the pressure tube 44 is not configured to be pressed on by the bumper cover 14 as in the related art, but rather is configured to be pressed on by the pressing portion 32 using the collision load F acting on the hood 26. Therefore, even in the vehicle 10 in which the front end 26A of the hood 26 is arranged farther toward the vehicle front side than the bumper RF 12 is and the vehicle front end upper portion 10A protrudes farther toward the vehicle front side than the vehicle front end lower portion 10B does, in a design when viewed from the side, as shown in FIG. 5A, the pressure tube 44 is able to be well pressed on by the pressing portion 32. As a result, even in a vehicle having a design such as that of the vehicle 10 when viewed from the side, a collision between the vehicle 10 and the pedestrian P is able to be detected well by the pedestrian collision detection sensor 42.

Also, the pedestrian collision detection sensor 42 includes the pressure tube 44 and the pressure sensor 46, and the pressure tube 44 is formed having a generally annular sectional shape and extends in the vehicle width direction. Therefore, the mounting space of the pedestrian collision detection sensor 42 is able to be set relatively small. As a result, the mounting structure S of the pedestrian collision detection sensor having good space efficiency is able to be realized in the vehicle 10.

Moreover, by using the pressure tube 44 in the pedestrian collision detection sensor 42, the pressure tube 44 is able to be deformed by a relatively low load, and the pressure tube 44 is able to be easily made to curve along the housing portion 22. As a result, the detection accuracy of the pedestrian collision detection sensor 42 can be improved, as can the assemblability of the pressure tube 44 to the radiator support cover 20.

Also, the pressure tube 44 of the pedestrian collision detection sensor 42 is housed in the housing portion 22 of the radiator support cover 20 and fixed to the radiator support cover 20. That is, the pedestrian collision detection sensor 42 is fixed not the hood 26 that is able to move with respect to the vehicle body (i.e., that opens and closes the power unit compartment 24), but to the radiator support cover 20 that is fixed to the vehicle body. Therefore, a connecting member that connects the pedestrian collision detection sensor 42 to the ECU 48 is able to be easily arranged compared with when the pressure tube 44 is fixed to the hood 26.

Further, the pressing portion 32 is inclined toward the vehicle upper side farther toward the vehicle rear side in a side sectional view. Therefore, the pressing portion 32 is arranged in a direction that is substantially orthogonal to the collision load F downward at an angle toward the rear of the vehicle that acts on the hood 26 when there is a collision between the vehicle 10 and the pedestrian P. As a result, the pressure tube 44 is able to be pressed on efficiently by the pressing portion 32.

In this example embodiment, the pedestrian collision detection sensor 42 is fixed to the radiator support cover 20, and the pressing portion 32 is provided on the hood 26. Instead of this, the pedestrian collision detection sensor 42 may be fixed to the hood 26, and the pressing portion 32 may be provided on the radiator support cover 20. More specifically, the housing portion 22 that is open downward at an angle toward the rear of the vehicle is formed on the hood inner panel 30, and the housing portion 22 extends in the vehicle width direction along the front end 26A of the hood 26. Also, the pressing portion 32 is arranged opposite the lower portion of the pressure tube 44, and is inclined toward the vehicle upper side farther toward the rear of the vehicle in a side sectional view. Further, a connecting member that connects the pressure sensor 46 to the ECU 48 is arranged extending from the pressure sensor 46 to around a hood hinge that pivotally supports the hood 26. In this case as well, when the collision load downward at an angle toward the rear of the vehicle at the time of a collision between the vehicle 10 and the pedestrian P is applied to the front end portion of the hood 26, and the front end portion of the hood 26 consequently bendably deforms downward (toward the pressure tube 44 side) at an angle toward the rear of the vehicle, the pressure tube 44 is displaced downward (toward the pressing portion 32 side) at an angle toward the rear of the vehicle and is pressed on by the pressing portion 32.

Also, in this example embodiment, the pedestrian collision detection sensor 42 includes the pressure tube 44 and the pressure sensor 46. Instead of this, the pedestrian collision detection sensor 42 may be configured as an optical fiber sensor, for example. In this case, the radiator support cover 20 may be made of metal material or the like to increase the bending rigidity of the radiator support cover 20, for example.

Furthermore, in this example embodiment, the pressure tube 44 is curved in a generally arc shape that protrudes toward the vehicle front side, and is arranged along the front end 26A of the hood 26 in a plan view from above the vehicle, but the arrangement of the pressure tube 44 is not limited to this. That is, the pressure tube 44 may be arranged extending substantially linearly in the vehicle width direction in a plan view, for example, corresponding to the shape of the front end 26A of the hood 26 of various vehicles.

Also, in this example embodiment, the housing portion 22 is integrally formed on the radiator support cover 20, but the housing portion 22 may also be formed separately from the radiator support cover 20. For example, the rear wall portion 22C of the housing portion 22 may be formed by a separate bracket, and this bracket may be fixed to the radiator support cover 20.

Moreover, the mounting structure S of the pedestrian collision detection sensor is applied to the vehicle 10 in which the vehicle front end upper portion 10A protrudes farther toward the vehicle front side than the vehicle front end lower portion 10B does in the design when viewed from the side, but the side view design of the vehicle to which the mounting structure S of the pedestrian collision detection sensor is applied is not limited to this. For example, the mounting structure S of the pedestrian collision detection sensor may also be applied to a vehicle in which the vehicle front end lower portion protrudes farther toward the vehicle front side than the vehicle front end upper portion does.

In a vehicle (10), a pressure tube (44) is fixed to a radiator support cover (20), and extends in a vehicle width direction between a front end portion of a hood (26) and the radiator support cover (20). Also, a pressing portion (32) is provided on the hood (26). This pressing portion (32) is arranged opposite the pressure tube (44). When the front end portion of the hood (26) bendably deforms as a result of a pedestrian falling onto the hood (26) when a collision occurs between the vehicle (10) and the pedestrian, the pressing portion (32) presses on the pressure tube (44). In this way, the vehicle (10) is configured such that the pressing portion (32) presses on the pressure tube (44), so the pressure tube (44) is able to be pressed on well by the pressing portion (32) even if a vehicle front end upper portion protrudes farther toward a vehicle front side than a vehicle front end lower portion does in a side view design.

## Claims

1. A mounting structure (S) of a pedestrian collision detection sensor, comprising:
a vehicle body-side member (20) provided below a vehicle lower side of a front end portion of a hood (26);
a pedestrian collision detection sensor (42) that is fixed to one of the vehicle body-side member (20) and the front end portion of the hood (26), and that extends in a vehicle width direction between the vehicle body-side member (20) and the front end portion of the hood (26), and that is connected to a collision determining portion (48) that determines whether an object that collides with the vehicle is a pedestrian, and in which an output signal to the collision determining portion (48) changes in response to the pedestrian collision detection sensor (42) being pressed on; and
a pressing portion (32) that is provided on the other of the vehicle body-side member (20) and the front end portion of the hood (26), and is arranged opposite the pedestrian collision detection sensor (42), and that is configured to press on the pedestrian collision detection sensor (42); **characterized in that**
the pedestrian collision detection sensor (42) includes a pressure tube (44) that extends in the vehicle width direction, and a pressure detector (46) that outputs a signal indicative of a change in pressure in the pressure tube to the collision determining portion (48).

2. The mounting structure of the pedestrian collision detection sensor according to claim 1, wherein
the pedestrian collision detection sensor (42) is fixed to the vehicle body-side member (20);
the pressing portion (32) is provided on the front end portion of the hood (26); and
the pressing portion (32) is inclined toward a vehicle upper side farther toward a vehicle rear side in a side sectional view.

3. The mounting structure of the pedestrian collision detection sensor according to any one of claims 1 or 2, wherein
the vehicle body-side member is a radiator support cover (20) made of resin that is arranged covering a radiator support (18) from a vehicle upper side.

4. The mounting structure of the pedestrian collision detection sensor according to claim 3, wherein
a rear end portion of the radiator support cover (20) is fixed to a radiator support upper (18A) that forms an upper portion of the radiator support (18).

5. The mounting structure of the pedestrian collision detection sensor according to claim 3 or 4, wherein
a front end portion of the radiator support cover (20) is fixed to a radiator grille (16); and
the front end portion of the radiator support cover (20) is curved in a generally arc shape that protrudes toward a vehicle front side in a plan view from a vehicle upper side.

6. The mounting structure of the pedestrian collision detection sensor according to any one of claims 3 to 5, wherein
a housing portion (22) for housing at least a portion (44) of the pedestrian collision detection sensor (42) is integrally formed on the front end portion of the radiator support cover (20); and
the housing portion (22) is formed in a recessed shape that is open toward the vehicle upper side in a side sectional view.

7. The mounting structure of the pedestrian collision detection sensor according to claim 6, wherein
the housing portion (22) includes a bottom wall portion (22A) in which a plate thickness direction is a substantially vehicle up-down direction, a front wall portion (22B) that extends from a front end of the bottom wall portion (22A) toward the vehicle upper side and a vehicle front side, and a rear wall portion (22C) that extends from a rear end of the bottom wall portion (22A) toward the vehicle upper side and a vehicle rear side; and
the housing portion (22) has a uniform sectional shape and extends in the vehicle width direction along the front end portion of the radiator support cover (20).

8. The mounting structure of the pedestrian collision detection sensor according to claim 5, wherein
the front end portion of the hood (26) is curved so as to form a concentric circle with the front end of the radiator support cover (20), in the plan view from above the vehicle when the hood (26) is in a closed position.

9. The mounting structure of the pedestrian collision detection sensor according to any one of claims 1 to 8, wherein
the pressing portion (32) is formed on the front end portion of the hood (26), and extends in the vehicle width direction along the front end portion of the hood (26).

10. The mounting structure of the pedestrian collision detection sensor according to claim 6 or 7, wherein
when a portion of the pedestrian collision detection sensor (42) is fixed to the radiator support cover (20), an upper portion of the portion (44) of the pedestrian collision detection sensor (42) protrudes farther toward the vehicle upper side than the housing portion (22) of the radiator support cover (20) does, and the pressing portion (32) of the hood (26) is arranged substantially opposite the upper portion of the portion (44) of the pedestrian collision detection sensor (42) in the vehicle up-down direction.

11. A vehicle comprising a mounting structure of the pedestrian collision detection sensor according to any one of claims 1 to 10, wherein
a vehicle front end upper portion protrudes farther toward a vehicle front side than a vehicle front end lower portion does in a side view.

12. The vehicle according to claim 11, wherein
the front end portion of the hood (26) is arranged farther toward a vehicle front side than a bumper reinforcement (12), in a side view.

## Patentansprüche

1. Montageaufbau (S) eines Fußgängerkollisionserfassungssensors, mit:
einem fahrzeugkörperseitigen Element (20), das unterhalb einer Fahrzeugunterseite eines vorderen Endabschnittes einer Haube (26) vorgesehen ist;
einem Fußgängerkollisionserfassungssensor (42), der an entweder dem fahrzeugkörperseitigen Element (20) oder dem vorderen Endabschnitt der Haube (26) fixiert ist und der sich in einer Fahrzeugbreitenrichtung zwischen dem fahrzeugkörperseitigen Element (20) und dem vorderen Endabschnitt der Haube (26) erstreckt, und der mit einem Kollisionsbestimmungsabschnitt (48) verbunden ist, der bestimmt, ob ein Objekt, das mit dem Fahrzeug kollidiert, ein Fußgänger ist, und bei dem ein Abgabesignal zu dem Kollisionsbestimmungsabschnitt (48) sich im Ansprechen auf ein Drücken des Fußgängerkollisionserfassungssensors (42) ändert; und
einem Drückabschnitt (32), der an dem anderen Element, d. h. dem fahrzeugkörperseitigen Element (20) oder dem vorderen Endabschnitt der Haube (26), vorgesehen ist und gegenüberstehend dem Fußgängerkollisionserfassungssensor (42) angeordnet ist, und der so aufgebaut ist, dass er auf den Fußgängerkollisionserfassungssensor (42) drückt;
**dadurch gekennzeichnet, dass**
der Fußgängerkollisionserfassungssensor (42) eine Druckröhre (44), die sich in der Fahrzeugbreitenrichtung erstreckt, und einen Druckerfasser (46) hat, der ein Signal, das eine Änderung eines Drucks in der Druckröhre anzeigt, zu dem Kollisionsbestimmungsabschnitt (48) ausgibt.

2. Montageaufbau des Fußgängerkollisionserfassungssensors gemäß Anspruch 1, wobei
der Fußgängerkollisionserfassungssensor (42) an dem fahrzeugkörperseitigen Element (20) fixiert ist;
der Drückabschnitt (32) an dem vorderen Endabschnitt der Haube (26) vorgesehen ist; und
der Drückabschnitt (32) unter Betrachtung in einer Seitenschnittansicht zu einer Fahrzeugoberseite hin weiter zu einer Fahrzeugrückseite geneigt ist.

3. Montageaufbau des Fußgängerkollisionserfassungssensors gemäß einem der Ansprüche 1 oder 2, wobei
das fahrzeugkörperseitige Element eine Kühlerstützabdeckung (20) ist, die aus Kunststoff hergestellt ist und die so angeordnet ist, dass sie eine Kühlerstütze (18) von einer Fahrzeugoberseite bedeckt.

4. Montageaufbau des Fußgängerkollisionserfassungssensors gemäß Anspruch 3, wobei
ein hinterer Endabschnitt der Kühlerstützabdeckung (20) an einem Kühlerstützoberteil (18A) fixiert ist, der einen oberen Abschnitt der Kühlerstütze (18) ausbildet.

5. Montageaufbau des Fußgängerkollisionserfassungssensors gemäß Anspruch 3 oder 4, wobei
ein vorderer Endabschnitt der Kühlerstützabdeckung (20) an einem Kühlergitter (16) fixiert ist; und
der vordere Endabschnitt der Kühlerstützabdeckung (20) in einer im Allgemeinen bogenartigen Form gekrümmt ist, die zu einer Fahrzeugvorderseite in einer Draufsicht von einer Fahrzeugoberseite vorragt.

6. Montageaufbau des Fußgängerkollisionserfassungssensors gemäß einem der Ansprüche 3 bis 5, wobei
ein Gehäuseabschnitt (22) zum Unterbringen zumindest eines Abschnittes (44) des Fußgängerkollisionserfassungssensors (42) an dem vorderen Endabschnitt der Kühlerstützabdeckung (20) einstückig ausgebildet ist; und
der Gehäuseabschnitt (22) in einer vertieften Form ausgebildet ist, die zu der Fahrzeugoberseite in einer Seitenschnittansicht offen ist.

7. Montageaufbau des Fußgängerkollisionserfassungssensors gemäß Anspruch 6, wobei
der Gehäuseabschnitt (22) einen Bodenwandabschnitt (22A), in dem eine Plattendickenrichtung eine im Wesentlichen nach oben und nach unten gerichtete Richtung des Fahrzeugs ist, einen vorderen Wandabschnitt (22B), der sich von einem vorderen Ende des Bodenwandabschnittes (22A) zu der Fahrzeugoberseite und einer Fahrzeugvorderseite erstreckt, und einen hinteren Wandabschnitt (22C) hat, der sich von einem hinteren Ende des Bodenwandabschnittes (22A) zu der Fahrzeugoberseite und einer Fahrzeughinterseite erstreckt; und
der Gehäuseabschnitt (22) eine gleichförmige Querschnittsform hat und sich in einer Fahrzeugbreitenrichtung entlang des vorderen Endabschnittes der Kühlerstützabdeckung (20) erstreckt.

8. Montageaufbau des Fußgängerkollisionserfassungssensors gemäß Anspruch 5, wobei
der vordere Endabschnitt der Haube (26) so gekrümmt ist, dass er einen konzentrischen Kreis mit dem vorderen Ende der Kühlerstützabdeckung (20) in der Draufsicht von oberhalb des Fahrzeugs ausbildet, wenn die Haube (26) in einer geschlossenen Position ist.

9. Montageaufbau des Fußgängerkollisionserfassungssensors gemäß einem der Ansprüche 1 bis 8, wobei
der Drückabschnitt (32) an dem vorderen Endabschnitt der Haube (26) ausgebildet ist und sich in der Fahrzeugbreitenrichtung entlang dem vorderen Endabschnitt der Haube (26) erstreckt.

10. Montageaufbau des Fußgängerkollisionserfassungssensors gemäß Anspruch 6 oder 7, wobei
wenn ein Abschnitt des Fußgängerkollisionserfassungssensors (42) an der Kühlerstützabdeckung (20) fixiert ist, ein oberer Abschnitt des Abschnittes (44) des Fußgängerkollisionserfassungssensors (42) weiter zu der Fahrzeugoberseite hin vorragt als der Gehäuseabschnitt (22) der Kühlerstützabdeckung (20), und der Drückabschnitt (32) der Haube (26) im Wesentlichen gegenüberliegend dem oberen Abschnitt des Abschnittes (44) des Fußgängerkollisionserfassungssensors (42) der nach oben und nach unten weisenden Richtung des Fahrzeugs angeordnet ist.

11. Fahrzeug mit einem Montageaufbau des Fußgängerkollisionserfassungssensors gemäß einem der Ansprüche 1 bis 10, wobei
unter Betrachtung in einer Seitenansicht ein Fahrzeugvorderendoberabschnitt weiter zu einer Fahrzeugvorderseite vorragt als ein Fahrzeugvorderendunterabschnitt.

12. Fahrzeug gemäß Anspruch 11, wobei
unter Betrachtung in einer Seitenansicht der vordere Endabschnitt der Haube (26) weiter zu einer Fahrzeugvorderseite hin angeordnet ist als eine Stoßfängerverstärkung (12).

## Revendications

1. Structure de montage (S) d'un capteur de détection de collision avec un piéton, comportant :
un élément côté carrosserie (20) prévu en dessous d'un côté inférieur de véhicule d'une partie terminale antérieure d'un capot (26) ;
un capteur de détection de collision avec un piéton (42) qui est fixé à l'un de l'élément côté carrosserie (20) et de la partie terminale antérieure du capot (26), et qui s'étend dans une direction de largeur d'un véhicule entre l'élément côté carrosserie (20) et la partie terminale antérieure du capot (26), et qui est relié à une partie de détermination de collision (48) qui détermine si un objet qui entre en collision avec le véhicule est un piéton, et dans lequel un signal de sortie à la partie de détermination de collision (48) change en réponse au pressage du capteur de détection de collision avec un piéton (42) ; et
une partie de pression (32) qui est prévue sur l'autre de l'élément côté carrosserie (20) et de la partie terminale antérieure du capot (26), et est disposée en vis-à-vis du capteur de détection de collision avec un piéton (42), et qui est configurée pour presser le capteur de détection de collision avec un piéton (42) ;
**caractérisée en ce que**
le capteur de détection de collision avec un piéton (42) comprend un tube de pression (44) qui s'étend dans la direction de largeur du véhicule, et un détecteur de pression (46) qui délivre un signal indiquant un changement de pression dans le tube de pression à la partie de détermination de collision (48).

2. Structure de montage du capteur de détection de collision avec un piéton selon la revendication 1, dans laquelle
le capteur de détection de collision avec un piéton (42) est fixé à l'élément côté carrosserie (20) ;
la partie de pression (32) est prévue sur la partie terminale antérieure du capot (26) ; et
la partie de pression (32) est inclinée vers un côté supérieur du véhicule plus loin vers un côté postérieure du véhicule selon une vue en coupe latérale.

3. Structure de montage du capteur de détection de collision avec un piéton selon l'une quelconque des revendications 1 ou 2, dans laquelle
l'élément côté carrosserie est un couvercle de support de radiateur (20) réalisé en résine qui est disposé recouvrant un support de radiateur (18) depuis un côté supérieur du véhicule.

4. Structure de montage du capteur de détection de collision avec un piéton selon la revendication 3, dans laquelle
une partie terminale postérieure du couvercle de support de radiateur (20) est fixée à une partie supérieure du support de radiateur (18A) qui forme une partie supérieure du support de radiateur (18).

5. Structure de montage du capteur de détection de collision avec un piéton selon la revendication 3 ou 4, dans laquelle
une partie terminale antérieure du couvercle de support de radiateur (20) est fixée à une calandre (16) ; et
la partie terminale antérieure du couvercle de support de radiateur (20) est courbée en une forme généralement arquée qui fait saillie vers un côté antérieur du véhicule selon une vue en plan depuis le côté supérieur du véhicule.

6. Structure de montage du capteur de détection de collision avec un piéton selon l'une quelconque des revendications 3 à 5, dans laquelle
une partie de boîtier (22) pour loger au moins une partie (44) du capteur de détection de collision avec un piéton (42) est formée d'une seule pièce sur la partie terminale antérieure du couvercle de support de radiateur (20) ; et
la partie de boîtier (22) est de forme évidée qui est ouverte vers le côté supérieur du véhicule selon une vue en coupe latérale.

7. Structure de montage du capteur de détection de collision avec un piéton selon la revendication 6, dans laquelle
la partie de boîtier (22) comprend une partie de paroi inférieure (22A) dans laquelle une direction d'épaisseur de plaque est sensiblement une direction haut-bas de véhicule, une partie de paroi antérieure (22B) qui s'étend d'une extrémité antérieure de la partie de paroi inférieure (22A) vers le côté supérieur de véhicule et un côté antérieur de véhicule, et une partie de paroi postérieure (22C) qui s'étend d'une extrémité postérieure de la partie de paroi inférieure (22A) vers le côté supérieur de véhicule et un côté postérieur de véhicule ; et
la partie de boîtier (22) possède une forme en coupe uniforme et s'étend dans la direction de largeur de véhicule le long de la partie terminale antérieure du couvercle de support de radiateur (20).

8. Structure de montage du capteur de détection de collision avec un piéton selon la revendication 5, dans laquelle
la partie terminale antérieure du capot (26) est courbée de manière à former un cercle concentrique avec l'extrémité antérieure du couvercle de support de radiateur (20), selon la vue en plan depuis le dessus du véhicule lorsque le capot (26) est en position fermée.

9. Structure de montage du capteur de détection de collision avec un piéton selon l'une quelconque des revendications 1 à 8, dans laquelle
la partie de pression (32) est formée sur la partie terminale antérieure du capot (26), et s'étend dans la direction de largeur du véhicule le long de la partie terminale antérieure du capot (26).

10. Structure de montage du capteur de détection de collision avec un piéton selon la revendication 6 ou 7, dans laquelle
lorsqu'une partie du capteur de détection de collision avec un piéton (42) est fixée au couvercle de support de radiateur (20), une partie supérieure de la partie (44) du capteur de détection de collision avec un piéton (42) fait saillie plus loin vers le côté supérieur du véhicule que la partie de boîtier (22) du couvercle de support de radiateur (20), et la partie de pression (32) du capot (26) est disposée sensiblement en vis-à-vis de la partie supérieure de la partie (44) du capteur de détection de collision avec un piéton (42) dans la direction haut-bas de véhicule.

11. Véhicule comportant une structure de montage du capteur de détection de collision avec un piéton selon l'une quelconque des revendications 1 à 10, dans lequel
une partie supérieure terminale antérieure de véhicule fait saillie plus loin vers un côté antérieur de véhicule qu'une partie inférieure terminale antérieure de véhicule selon une vue latérale.

12. Véhicule selon la revendication 11, dans lequel
la partie terminale antérieure du capot (26) est disposée plus loin vers un côté antérieur du véhicule qu'un renforcement du pare-choc (12), selon une vue latérale.
